# EUROPÄISCHE PATENTANMELDUNG

(11) **EP 3 822 015 A1**
(43) Veröffentlichungstag der Anmeldung: **19.05.2021**
(21) Anmeldenummer: 19209712.9
(22) Anmeldetag: 18.11.2019
(51) Int. Cl.: B23K 9/127, B23K 9/235, B23K 9/32

(54) **VERFAHREN ZUM ABTASTEN DER OBERFLÄCHE METALLISCHER WERKSTÜCKE**

(71) Anmelder: FRONIUS INTERNATIONAL GmbH, 4643 Pettenbach (AT)
(72) Erfinder: MAYER, Manuel, 4643 Pettenbach (AT); WALDHÖR, Andreas, 4643 Pettenbach (AT); BINDER, Manuel, 4643 Pettenbach (AT)
(74) Vertreter: Sonn & Partner Patentanwälte

(57) **Zusammenfassung**

Die Erfindung betrifft ein Verfahren zum Abtasten der Oberfläche (O) metallischer Werkstücke (W), wobei während eines Abtastprozesses (AP) ein Schweißbrenner (1) mit einem abschmelzenden Schweißdraht (2) über die Oberfläche (O) des Werkstücks (W) bewegt wird, und zu vorgegebenen Zeitpunkten (tᵢ) der Schweißdraht (2) mit einer Vorwärtsgeschwindigkeit (v_{SV}) zur Oberfläche (O) des Werkstücks (W) bewegt wird, bis von einer Schweißstromquelle (4) ein Kontakt des Schweißdrahts (2) mit dem Werkstück (W) detektiert wird, und der Schweißdraht (2) anschließend mit einer Rückwärtsgeschwindigkeit (v_{SR}) wieder vom Werkstück (W) wegbewegt wird. Erfindungsgemäß wird vor dem Abtastprozess (AP) ein Schlacken-Entfernungsprozess (SE) zur Entfernung von Schlacke am Ende des Schweißdrahtes (2) durchgeführt, wobei mit Beginn des Schlacken-Entfernungsprozesses (SE) der Schweißstrom (I) auf ein Minimum gesenkt wird, und der Schweißdraht (2) mit einer schnellen wiederkehrenden Vor-/Rückwärtsbewegung zyklisch eine vorgegebene Weglänge in Richtung Werkstück (W) und um eine kleinere Wegstrecke wieder vom Werkstück (W) wegbewegt wird, sodass die Förderung des Schweißdrahtes (2) zum Werkstück (W) überwiegt, bis ein Kurzschluss zwischen dem Schweißdraht (2) und dem Werkstück (W) erkannt wird, worauf der Schlacken-Entfernungsprozess (SE) beendet wird.

## Beschreibung

Die Erfindung betrifft ein Verfahren zum Abtasten der Oberfläche metallischer Werkstücke, wobei während eines Abtastprozesses ein Schweißbrenner mit einem abschmelzenden Schweißdraht über die Oberfläche des Werkstücks bewegt wird, und zu vorgegebenen Zeitpunkten der Schweißdraht mit einer Vorwärtsgeschwindigkeit zur Oberfläche des Werkstücks bewegt wird, bis von einer Schweißstromquelle ein Kontakt des Schweißdrahts mit dem Werkstück detektiert wird, und der Schweißdraht anschließend mit einer Rückwärtsgeschwindigkeit wieder vom Werkstück wegbewegt wird.

Der Schweißdraht eines Schweißgeräts kann vor einem Schweißprozess dazu verwendet werden, die Oberfläche der zu bearbeitenden Werkstücke abzutasten, indem der Schweißdraht als Sensor verwendet wird, indem er zu vorgegebenen Zeitpunkten in Richtung Werkstück bewegt wird, bis der Schweißdraht das Werkstück berührt und einen Kurzschluss bildet. Anschließend wird der Schweißdraht wieder vom Werkstück wegbewegt. Über die Bewegungen des Schweißdrahts, welche durch Drehgeber im Vorschubgerät erfasst werden, kann auf die Position des Schweißdrahts beim Kontakt mit dem Werkstück, und somit auf die Position der Oberfläche des Werkstücks rückgeschlossen werden.

Beispielsweise beschreibt die WO 2019/002141 A1 ein Verfahren und eine Vorrichtung zur Abtastung einer Oberfläche eines metallischen Werkstücks mit Hilfe des Schweißdrahts des Schweißbrenners. Dabei wird während des Abtastprozesses bei jedem Kurzschluss des Schweißdrahts mit dem metallischen Werkstück ein Positionswert ermittelt und gespeichert bzw. ausgegeben, welcher vom Manipulator zum Detektieren einer Kante oder einer bestimmten Position benutzt werden kann.

Am Schweißdraht kann sich nach einem Schweißprozess Schlacke bzw. Silikate ablagern (besonders bei Stahllegierungen), welche isolierend wirken. Diese Isolationsschicht am freien Ende des Schweißdrahts kann den Abtastprozess mit Hilfe des Schweißdrahts blockieren, da bei der Berührung des Schweißdrahts mit dem Werkstück kein Kurzschluss erkannt wird.

Es ist bekannt, vor einem Schweißprozess allfällige Schlacke am Ende des Schweißdrahts zu entfernen, um ein sicheres Zünden eines Lichtbogens zu gewährleisten. Zu diesem Zweck kann ein Schlacken-Entfernungsprozess vor dem Schweißverfahren angewendet werden, wobei der Schweißstrom auf ein Minimum gesenkt wird, und der Schweißdraht mit einer schnellen wiederkehrenden Vor-/Rückwärtsbewegung zyklisch eine vorgegebene Weglänge in Richtung Werkstück und um eine kleinere Wegstrecke wieder vom Werkstück wegbewegt wird, bis von einer Kurzschlussüberwachung ein Kurzschluss zwischen dem Schweißdraht und dem Werkstück erkannt wird, worauf der Schlacken-Entfernungsprozess beendet wird. Ein derartiges Verfahren wird in der EP 2 007 542 B1 beschrieben.

Die Aufgabe der vorliegenden Erfindung besteht darin, ein oben genanntes Abtastverfahren soweit zu verbessern, sodass eine sichere Erkennung eines Kurzschlusses bei der Berührung des Schweißdrahts mit dem metallischen Werkstück gewährleistet wird. Dadurch soll das Abtastverfahren möglichst rasch und unterbrechungsfrei durchführbar sein. Nachteile bekannter Verfahren sollen vermieden oder zumindest reduziert werden.

Gelöst wird die Aufgabe durch ein oben genanntes Abtastverfahren, wobei vor dem Abtastprozess ein Schlacken-Entfernungsprozess zur Entfernung von Schlacke am Ende des Schweißdrahtes durchgeführt wird, wobei mit Beginn des Schlacken-Entfernungsprozesses der Schweißstrom auf ein Minimum gesenkt wird, und der Schweißdraht mit einer schnellen wiederkehrenden Vor-/Rückwärtsbewegung zyklisch eine vorgegebene Weglänge in Richtung Werkstück und um eine kleinere Wegstrecke wieder vom Werkstück wegbewegt wird, sodass die Förderung des Schweißdrahtes zum Werkstück überwiegt, bis ein Kurzschluss zwischen dem Schweißdraht und dem Werkstück erkannt wird, worauf der Schlacken-Entfernungsprozess beendet wird. Erfindungsgemäß ist daher vorgesehen, dass vor dem Abtastverfahren ein Schlacken-Entfernungsprozess durchgeführt wird, um sicherzustellen, dass allenfalls am freien Ende des Schweißdrahts vorhandene Schlacke entfernt werden kann und somit eine sichere Abtastung der Oberfläche des Werkstücks mit dem Schweißdraht möglich ist. Durch das mehrmalige Aufschlagen des Schweißdrahts an der Werkstückoberfläche während des Schlacken-Entfernungsprozesses wird im Allgemeinen die Schlacke am freien Ende des Schweißdrahts entfernt und die Kurzschlusserkennung während des nachfolgenden Abtastprozesses sichergestellt.

Gemäß einem Merkmal der Erfindung wird der Schlacken-Entfernungsprozess beendet, wenn hintereinander mehrere, vorzugsweise fünf, Kurzschlüsse zwischen dem Schweißdraht und dem Werkstück detektiert werden. Durch diese Maßnahme wird eine Entfernung der Schlacke am freien Ende des Schweißdrahts sichergestellt. Durch das Zählen von aufeinanderfolgenden Kurzschlüssen während des Schlacken-Entfernungsprozesses kann eine weitere Absicherung zur Überprüfung der vollständigen Entfernung der Schlacke vom Schweißdraht realisiert werden. Erst nach Überschreiten dieser definierten Anzahl von Kurzschlüssen kann davon ausgegangen werden, dass die Schlacke sicher entfernt wurde, und der Schlacken-Entfernungsprozess kann beendet werden.

Der Schlacken-Entfernungsprozess kann vor dem Abtastprozess gestartet werden, wenn während einer festgelegten Zeitspanne kein Kurzschluss zwischen dem Schweißdraht und dem Werkstück detektiert wird. Dies stellt eine Voraussetzung für das Einleiten eines Schlacken-Entfernungsprozesses vor dem Abtastprozess dar, um eine einwandfreie Funktionalität zu gewährleisten.

Weiters kann vor dem Abtastprozess der Schweißdraht um eine vorgegebene Drahtvorschubgeschwindigkeit in Richtung Werkstück bewegt werden, und der Schlacken-Entfernungsprozess gestartet werden, wenn die Drahtvorschubgeschwindigkeit unter einen vorgegebenen Schwellwert sinkt. Dieser Einbruch der Drahtvorschubgeschwindigkeit unter einen vorgegebenen Schwellwert in der Startphase vor dem Abtastprozess ist ein Indiz dafür, dass sich Schlacke am Schweißdraht befindet. Beim Unterschreiten des vorgegebenen Schwellwerts der Drahtvorschubgeschwindigkeit wird also der Schlacken-Entfernungsprozess ausgelöst.

Dabei wird vorzugsweise vor der Messung, ob die Drahtvorschubgeschwindigkeit unter den vorgegebenen Schwellwert sinkt, eine vorgegebene Zeitdauer gewartet. Durch das Einhalten bestimmter Zeitvorgaben wird sichergestellt, dass Einschwingprozesse abgeklungen sind und der Schlacken-Entfernungsprozess nicht ungewollt ausgelöst wird.

Als weitere Bedingung für den Start des Schlacken-Entfernungsprozesses kann die Überschreitung der Kraft am Schweißdraht über einen vorgegebenen Maximalwert festgelegt werden. Wird beim Starten eines Abtastprozesses der Schweißdraht in Richtung Werkstück bewegt und es befindet sich Schlacke am Schweißdraht, kommt es aufgrund der isolierenden Wirkung der Schlacke zu einem messbaren Kraftanstieg beim längeren Aufschlagen des Schweißdrahts am Werkstück. Dieser Kraftanstieg kann über den Motorstrom der Motoren eines Drahtvorschubgeräts relativ einfach erfasst werden und als Voraussetzung für das Auslösen des Schlacken-Entfernungsprozesses herangezogen werden. Durch die Kombination einer der oben erwähnten Bedingungen, insbesondere dem Einbruch der Drahtvorschubgeschwindigkeit zu Beginn des Abtastprozesses mit der Kraftmessung kann das Vorliegen von Schlacke am Schweißdraht noch zuverlässiger erkannt werden und es können Fehlauslösungen des Schlacken-Entfernungsprozesses vermieden werden.

Schließlich ist es auch möglich, dass der Schlacken-Entfernungsprozess gestartet wird, wenn die zeitliche Änderung der Kraft am Schweißdraht einen vorgegebenen Schwellwert überschreitet. Auch die Überschreitung eines vorgegebenen gewissen Kraftanstiegs stellt eine sinnvolle Bedingung für die Auslösung des Schlacken-Entfernungsprozesses vor einem Abtastprozess dar.

Der Schlacken-Entfernungsprozess kann auch gestartet werden, wenn die Drahtvorschubgeschwindigkeit während des Abtastprozesses unter einen vorgegebenen Schwellwert sinkt. Auch dies stellt eine weitere Bedingung für die Auslösung des Schlacken-Entfernungsprozesses dar. Der Schwellwert der Drahtvorschubgeschwindigkeit während des Abtastprozesses ist in der Regel unterschiedlich zu dem oben genannten Schwellwert für die Drahtvorschubgeschwindigkeit in der Startphase des Abtastprozesses.

Gemäß einem weiteren Merkmal der Erfindung wird der Schlacken-Entfernungsprozess gestartet, wenn während des Abtastprozesses die Kraft am Schweißdraht einen vorgegebenen Maximalwert überschreitet. Wie zu Beginn des Abtastprozesses kann auch während des Abtastprozesses die Überschreitung einer maximalen Kraft am Schweißdraht oder die Überschreitung eines maximalen zeitlichen Kraftanstiegs am Schweißdraht ein Indiz für das Vorliegen von Schlacke am Schweißdraht sein, welche die Auslösung eines Schlacke-Entfernungsprozesses auch während des Abtastprozesses rechtfertigt beziehungsweise notwendig macht. Die Kräfte am Schweißdraht können über den Motorstrom des Motors des Drahtvorschubgeräts erfasst werden.

Wenn der Anstellwinkel des Schweißbrenners zur Oberfläche des Werkstücks ermittelt wird, und der Schlacken-Entfernungsprozess deaktiviert wird, wenn der Winkel einen vorgegebenen Grenzwert des Winkels unterschreitet, kann die Durchführung eines ineffizienten Schlacken-Entfernungsprozesses verhindert werden. Ist nämlich der Schweißbrenner und somit der Schweißdraht zu flach zum Werkstück orientiert, kann durch ein Auslenken oder Verbiegen des Schweißdrahts die Schlacke nicht oder nicht ausreichend vom Schweißdraht entfernt werden.

Der Schlacken-Entfernungsprozess wird vorzugsweise dann wiederholt, wenn kein Kurzschluss zwischen Schweißdraht und Werkstück detektiert wird. Dadurch kann eine sichere Entfernung der Schlacke vom Schweißdraht und danach ein fehlerfreier Abtastprozess gewährleistet werden.

Wenn nach mehreren Wiederholungen des Schlacken-Entfernungsprozesses, insbesondere nach 15 Wiederholungen, kein stabiler Kurzschlusszustand über mehrere Abtastzyklen zwischen Schweißdraht und Werkstück detektiert wird, kann eine Fehlermeldung ausgegeben werden. Durch die Fehlermeldung kann dem Schweißer angezeigt werden, dass es nicht gelungen ist, die Schlacke vom Schweißdraht mit Hilfe des Schlacken-Entfernungsprozesses zu entfernen und dass andere Maßnahmen notwendig sind.

Nach Ausgabe der Fehlermeldung kann beispielsweise als Maßnahme das Ende des Schweißdrahts in einer Abschneidevorrichtung abgeschnitten werden. Auf diese Weise wird auch dann, wenn vorhergehende Schlacken-Entfernungsprozesse erfolglos waren, der Schweißdraht wieder für einen Abtastprozess vorbereitet werden.

Die vorliegende Erfindung wird anhand der beigefügten Zeichnungen näher erläutert. Darin zeigen:
- Fig. 1: eine Prinzipskizze eines Schweißgeräts zur Durchführung eines Schweißprozesses und Abtastprozesses;
- Fig. 2: schematisch die Zeitverläufe der Schweißspannung, des Schweißstromes und der Vorschubgeschwindigkeit des Schweißdrahts und eines Bewegungsdiagramms des Schweißdrahts während eines Schlacken-Entfernungsprozesses;
- Fig. 3: schematisch die zeitlichen Verläufe der Drahtvorschubgeschwindigkeit und der Spannung bei einem Ausführungsbeispiel des Schlacken-Entfernungsprozesses;
- Fig. 4: schematisch die zeitlichen Verläufe der Drahtvorschubgeschwindigkeit und der Spannung bei einer alternativen Auslösebedingung für den Schlacken-Entfernungsprozess;
- Fig. 5: schematisch die zeitlichen Verläufe der Drahtvorschubgeschwindigkeit, der Kraft am Schweißdraht sowie der zeitlichen Änderung der Kraft am Schweißdraht bei einer weiteren Auslösebedingung für den Schlacken-Entfernungsprozess;
- Fig. 6: einen Schweißbrenner in einer für einen Schlacken-Entfernungsprozess gewünschter Winkellage zum Werkstück; und
- Fig. 7: einen Schweißbrenner in einer für den Schlacken-Entfernungsprozess ungeeigneten Winkellage zum Werkstück.

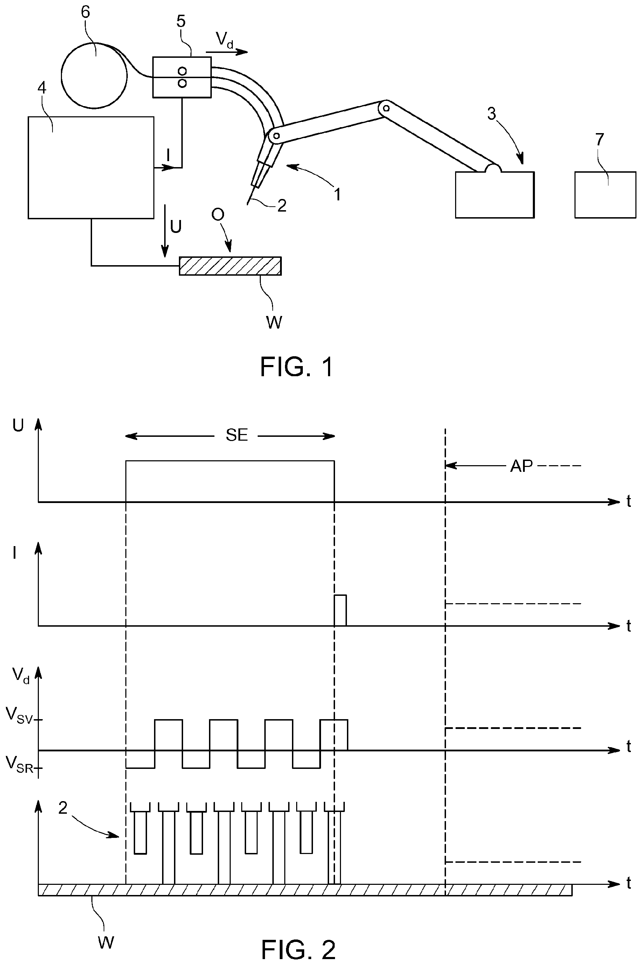

Fig. 1 zeigt eine Prinzipskizze eines Schweißgeräts zur Durchführung eines Schweißprozesses und Abtastprozesses AP. Ein Schweißbrenner 1 mit einem Schweißdraht 2 ist mit einem entsprechenden Manipulator 3, beispielsweise einem Schweißroboter verbunden. Eine Schweißstromquelle 4 versorgt den Schweißbrenner 1 bzw. den Schweißdraht 2 mit dem Schweißstrom I und der Schweißspannung U. Über ein Vorschubgerät 5 wird der Schweißdraht 2 mit einer Vorschubgeschwindigkeit v_{d} von einer Drahtrolle 6 zum Schweißbrenner 1 befördert. Während des Abtastprozesses AP wird der Schweißbrenner 1 mit dem Schweißdraht 2 mit Hilfe des Manipulators 3 entlang einer vorgegebenen Bahn und mit einer vorgegebenen Geschwindigkeit über die Oberfläche O der Werkstücke W bewegt. Zu vorgegebenen Zeitpunkten wird der Schweißdraht 2 mit einer Vorwärtsgeschwindigkeit vₛᵥ zur Oberfläche O der Werkstücke W bewegt, bis von der Schweißstromquelle 4 ein Kontakt des Schweißdrahts 2 mit einem der Werkstücke W detektiert wird. Danach wird der Schweißdraht 2 mit einer Rückwärtsgeschwindigkeit v_{SR} wieder von den Werkstücken W wegbewegt. Die Position der Oberfläche O der Werkstücke W wird zu jedem der Zeitpunkte in der Schweißstromquelle 4 ermittelt und gespeichert. Um allfällige Schlacke vom freien Ende des Schweißdrahts 2 zu entfernen, kann ein Schlacken-Entfernungsprozess SE durchgeführt werden, wobei der Schweißstrom I auf ein Minimum gesenkt wird, und der Schweißdraht 2 mit einer schnellen wiederkehrenden Vor-/Rückwärtsbewegung zyklisch eine vorgegebene Weglänge in Richtung Werkstück W und um eine kleinere Wegstrecke wieder vom Werkstück W wegbewegt wird, sodass die Förderung des Schweißdrahtes 2 zum Werkstück W überwiegt, bis ein Kurzschluss zwischen dem Schweißdraht 2 und dem Werkstück W erkannt wird. Sollte beim Schlacken-Entfernungsprozess SE die Schlacke vom Schweißdraht 2 auch nach mehrmaligen Wiederholungen nicht entfernt werden können, kann es notwendig sein, das Ende des Schweißdrahts 2 manuell oder in einer Abschneidevorrichtung 7 abzuschneiden und dadurch von der Schlacke zu befreien. Die Manipulation des Schweißbrenners 1 zur Abschneidevorrichtung 7 kann auch vollautomatisch durch den Manipulator 3, insbesondere Schweißroboter, durchgeführt werden.

Fig. 2 zeigt schematisch die Verläufe der Schweißspannung U, des Schweißstromes I, der Vorschubgeschwindigkeit v_{d} des Schweißdrahts 2 und eines Bewegungsdiagramms des Schweißdrahts 2 relativ zum Werkstück W während eines Schlacken-Entfernungsprozesses SE. Um zu verhindern, dass aufgrund einer am Schweißdraht 2 haftenden Schlacke ein Abtastprozess AP nicht oder nicht korrekt durchgeführt werden kann, erfolgt davor bei Bedarf ein Schlacken-Entfernungsprozess SE. Dabei wird mit dem Schlacken-Entfernungsprozess SE der Schweißdraht 2 nicht kontinuierlich zum Werkstück W gefördert, sondern mit einer bestimmten Frequenz vor, also zum Werkstück W bewegt, und wieder zurück, also vom Werkstück W entfernt. Der Schweißdraht 2 wird hierbei mit relativ hoher Geschwindigkeit v_{d} eine bestimmte Wegstrecke nach vor und eine kleinere Wegstrecke als vorwärts wieder zurückgefördert, so dass die Förderung des Schweißdrahtes 2 zum Werkstück W überwiegt. Hierbei liegt die Frequenz, mit welcher die Vor-/ Rückwärtsbewegung des Schweißdrahtes 2 durchgeführt wird, bevorzugt zwischen 50 Hz und 150 Hz. Selbstverständlich ist es auch möglich, niedrigere oder höhere Frequenzen für den Schlacken-Entfernungsprozess SE zu verwenden. Grundsätzlich ist hierbei zu beachten, dass mit der Frequenz auch die Dauer für den Schlacken-Entfernungsprozess SE definiert wird. Deshalb sind insbesondere höhere Frequenzen von Bedeutung, da dadurch die Dauer verkürzt wird. Der Schweißdraht 2 wird mit einer schnellen wiederkehrenden Vor-/Rückwärtsbewegung, beispielsweise mit einer eingestellten Frequenz von 75 Hz, bis zur Berührung mit dem Werkstück W gefördert. Wenn sich am Schweißdraht 2 Schlacke befindet, kann kein Kurzschluss KS zwischen Schweißdraht 2 und Werkstück W detektiert werden bzw. von einer Steuervorrichtung der Stromquelle 4 bzw. einer Kurzschlussüberwachung erkannt werden. Der Schweißdraht 2 wird entsprechend der eingestellten Frequenz weiter wiederkehrend zurück und wieder vor bewegt. Schließlich wird die Schlacke vom Ende des Schweißdrahts 2 gelöst und die Stromquelle 4 kann einen Kurzschluss KS durch einen Anstieg des Stromes I bzw. Einbruch der Spannung U detektieren. Danach kann der Schlacken-Entfernungsprozess SE beendet werden. Der Strom I beim Schlacken-Entfernungsprozess SE wird üblicherweise begrenzt, beispielsweise auf maximal 3 A, sodass ein Abbrennen des Schweißdrahts 2 verhindert werden kann.

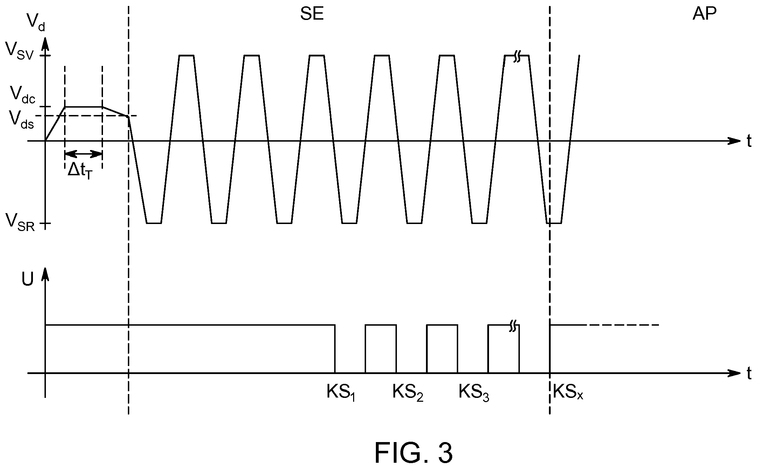

Fig. 3 zeigt schematisch die zeitlichen Verläufe der Drahtvorschubgeschwindigkeit v_{d} und der Spannung U bei einem Ausführungsbeispiel des Schlacken-Entfernungsprozesses SE. Vor der Durchführung eines Abtastprozesses AP steht der Schweißbrenner 1 über dem Werkstück W in einer Startposition. Der Schweißdraht 2 steht auch noch einige mm über der Oberfläche O des Werkstücks W. Bevor nun der Abtastprozess AP eingeleitet wird, beginnt der Schweißdraht 2 sich mit einer vorgegebenen Vorschubgeschwindigkeit v_{dc} in Richtung Werkstück W zu bewegen. Bis zum Erreichen des vorgegebenen Werts der Vorschubgeschwindigkeit v_{dc} kommt es zu einem Einschwingverhalten des Istwerts der Drahtvorschubgeschwindigkeit, weshalb vorzugsweise eine gewisse vorgegebene Zeit Δt_{T} gewartet wird, bevor die aktuelle Drahtvorschubgeschwindigkeit v_{d} gemessen wird. Dadurch kann eine ungewollte Auslösung des Schlacken-Entfernungsprozesses SE während dieser Einschwingvorgänge verhindert werden. Der Schlacken-Entfernungsprozess SE wird ausgelöst, wenn nach Ablauf der Zeit Δt_{T} die aktuelle Drahtvorschubgeschwindigkeit v_{d} unter eine vorgegebene Grenze v_{dS} gefallen ist. Dieser Grenzwert v_{dS} hat nur in der Startphase Gültigkeit. Nach Aktivierung des Schlacken-Entfernungsprozesses SE wird der Schweißdraht 2 mit hoher Beschleunigung und Kraft F zum Werkstück W und von diesem weg bewegt. Zunächst befindet sich der Schweißdraht 2 noch in der Luft, nähert sich aber immer mehr der Oberfläche O des Werkstücks W an. Danach "hämmert" der Schweißdraht 2 auf die Oberfläche O des Werkstücks W und es wird dabei die am Ende des Schweißdrahts 2 anhaftende Schlacke entfernt oder dies zumindest versucht. Um so sicher wie möglich zu erkennen, ob die Schlacke vom Schweißdraht 2 entfernt wurde, wird der Schlacken-Entfernungs-Prozess SE erst gestoppt, wenn eine definierte Anzahl n, beispielsweise 5, an zyklischen Kurzschlüssen KS detektiert wird. Nach dieser ersten Phase eines Schlacken-Entfernungsprozesses SE wird in die Abtastphase AP gewechselt. Sollte es zu gar keinen Kurzschlüssen kommen (da der Schweißdraht 2 wirklich isoliert) arbeitet der Schlacken-Entfernungsprozess SE so lange weiter, bis ein Abbruch vom Bediener oder der Robotersteuerung kommt. Hier wäre aber auch eine zeitliche Begrenzung denkbar.

Wenn es nach Beendigung des Schlacken-Entfernungsprozesses SE zu einem erneuten Einbruch der Drahtvorschubgeschwindigkeit v_{d} unter eine bestimmte festgelegte Schwelle kommt, kann der Schlacken-Entfernungsprozess SE wieder ausgelöst werden (nicht dargestellt) .

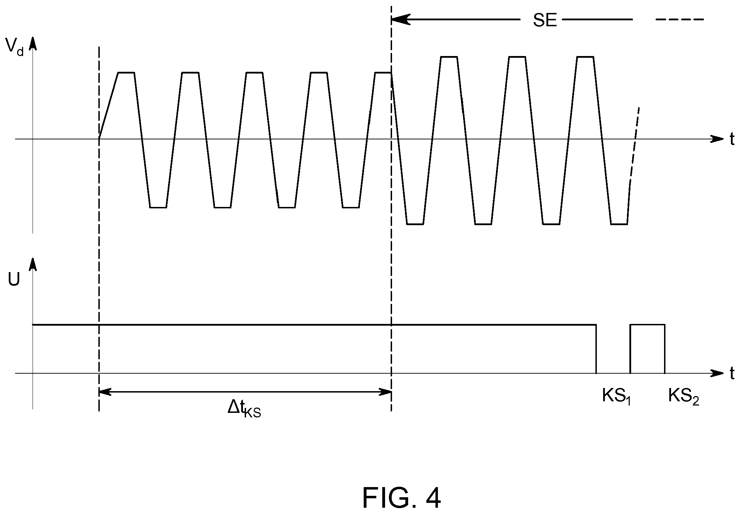

Fig. 4 zeigt schematisch die zeitlichen Verläufe der Drahtvorschubgeschwindigkeit v_{d} und der Spannung U bei einer alternativen Auslösebedingung für den Schlacken-Entfernungsprozess SE. Dabei wird vor der Anwendung eines Abtastprozesses AP der Schweißdraht 2 zum Werkstück W und wieder vom Werkstück W wegbewegt und dann ein Schlacken-Entfernungsprozess SE gestartet, wenn während einer festgelegten Zeitspanne Δt_{KS} kein Kurzschluss KS zwischen dem Schweißdraht 2 und dem Werkstück W detektiert wird. Im dargestellten Beispiel wird während dieser festgelegten Zeitspanne Δt_{KS} kein Kurzschluss KS detektiert (Spannungsabfall) und somit der Schlacken-Entfernungsprozess SE gestartet.

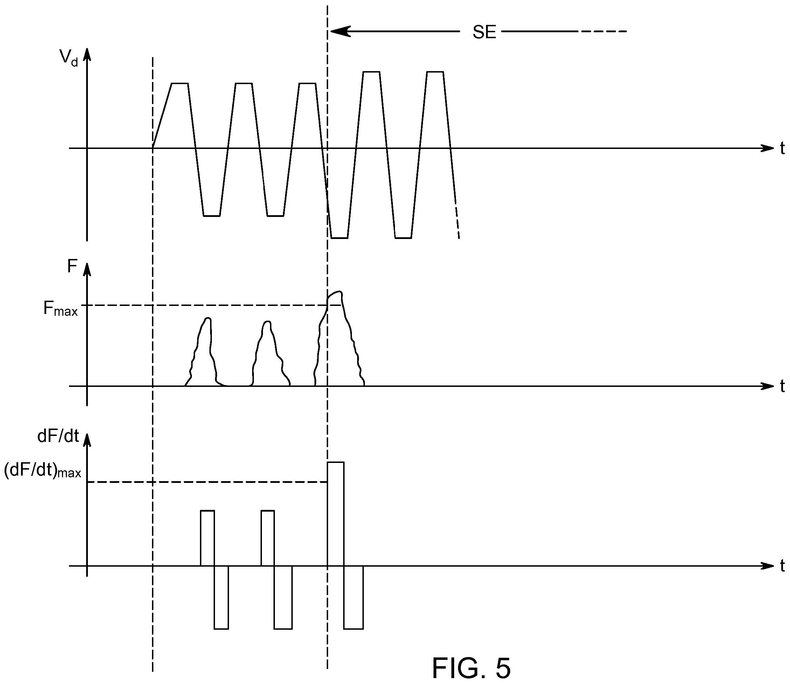

Fig. 5 zeigt schematisch die zeitlichen Verläufe der Drahtvorschubgeschwindigkeit v_{d}, der Kraft F am Schweißdraht 2 sowie der zeitlichen Änderung der Kraft dF/dt am Schweißdraht 2 bei einer weiteren Auslösebedingung für den Schlacken-Entfernungsprozess SE. Es wird darauf hingewiesen, dass der Verlauf der zeitlichen Ableitung der Kraft im untersten Diagramm stark vereinfacht dargestellt ist. Der Schlacken-Entfernungsprozess SE kann dann ausgelöst werden, wenn die Kraft F am Schweißdraht 2 über einen vorgegebenen Maximalwert Fₘₐₓ ansteigt. Alternativ oder zusätzlich kann auch dann der Schlacken-Entfernungsprozess SE gestartet werden, wenn ein gewisser Kraftanstieg dF/dt eine vorgegebene Grenze (dF/dt)ₘₐₓ überschreitet. Diese Bedingungen der Überschreitung einer maximalen Kraft Fₘₐₓ am Schweißdraht 2 oder einer maximalen zeitlichen Kraftänderung (dF/dt)ₘₐₓ am Schweißdraht kann auch während des Abtastprozesses AP und nicht vor dem Abtastprozess AP festgelegt werden. Die jeweiligen Grenzwerte für die maximale Kraft Fₘₐₓ und die maximale zeitliche Änderung der Kraft (dF/dt)ₘₐₓ werden nach Erfahrung eingestellt und können selbstverständlich für die Bedingung vor dem Abtastprozess AP und während des Abtastprozesses unterschiedlich sein.

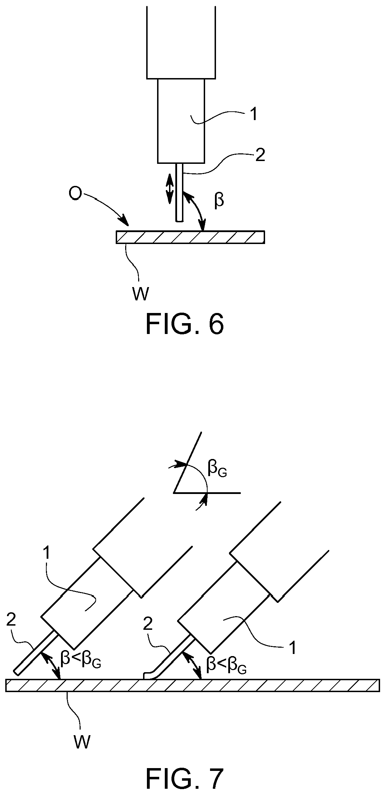

Fig. 6 zeigt einen Schweißbrenner 1 in einer für den Schlacken-Entfernungsprozess SE gewünschter Winkel β von etwa 90° zur Oberfläche O des Werkstücks W. Dies ist ein geeigneter Winkel β für den Schlacken-Entfernungsprozess SE, da hier der Schweißdraht 2 im Wesentlichen frontal auf die Oberfläche O des Werkstücks W auftrifft und daher die Wahrscheinlichkeit der Entfernung der Schlacke vom Ende des Schweißdrahts 2 sehr groß ist.

In Fig. 7 ist ein Schweißbrenner 1 in einer für den Schlacken-Entfernungsprozess SE ungeeigneten Winkellage zum Werkstück W skizziert. Hier unterschreitet der Winkel β des Schweißbrenners 1 zur Oberfläche O des Werkstücks W einen vorgegebenen Grenzwert β_{G} von beispielsweise 45°. In diesem Fall wird der Schweißdraht 2 bzw. dessen Ende beim Schlacken-Entfernungsprozess SE verbogen bzw. abgelenkt und es kann die Entfernung der Schlacke nicht sichergestellt werden. Bei Unterschreitung des Grenzwinkels β_{G} zwischen Schweißbrenner 1 und Schweißdraht 2 kann daher die Schlacken-Entfernungsprozess SE auch automatisch deaktiviert werden, da eine Schlacken-Entfernung nicht sichergestellt werden kann.

Die Lage des Schweißbrenners 1 könnte auch automatisch durch entsprechende Sensoren, beispielsweise Gyro-Sensoren und allenfalls einer Detektion einer im Schweißbrenner 1 befindlichen Brenneridentifikation BID zur Berücksichtigung der Brennergeometrie erfasst werden und daraus der Winkel β des Schweißbrenners 1 bzw. Schweißdrahts 2 zur Oberfläche O des Werkstücks W errechnet werden. Der Schlacken-Entfernungsprozess SE kann dann bei sehr flachen Anstellwinkeln des Schweißbrenners 1 automatisch deaktiviert werden, um Fehlfunktionen und Verformungen des Schweißdrahts 2 auszuschließen. Dabei kann natürlich eine Fehlermeldung an den Benutzer bzw. Schweißer ausgegeben werden.

Bei bestimmten Geometrien von Schweißbrennern 1 oder speziellen Geometrien mit hoher Reibung wäre es des Öfteren nötig, eine Vielzahl der Reglerparameter für die zuverlässige Auslösung und Funktion des Schlacken-Entfernungsprozesses SE speziell anzupassen. Auch dies könnte durch eine im Schweißbrenner 1 befindliche Brenneridentifikation BID automatisch durchgeführt werden. Somit würden für jeden Typ des Schweißbrenners 1 automatisch die optimalen Reglerparamter des Schlacken-Entfernungsprozesses SE zur Verfügung stehen.

## Patentansprüche

1. Verfahren zum Abtasten der Oberfläche (O) metallischer Werkstücke (W), wobei während eines Abtastprozesses (AP) ein Schweißbrenner (1) mit einem abschmelzenden Schweißdraht (2) über die Oberfläche (O) des Werkstücks (W) bewegt wird, und zu vorgegebenen Zeitpunkten (tᵢ) der Schweißdraht (2) mit einer Vorwärtsgeschwindigkeit (v_{SV}) zur Oberfläche (O) des Werkstücks (W) bewegt wird, bis von einer Schweißstromquelle (4) ein Kontakt des Schweißdrahts (2) mit dem Werkstück (W) detektiert wird, und der Schweißdraht (2) anschließend mit einer Rückwärtsgeschwindigkeit (v_{SR}) wieder vom Werkstück (W) wegbewegt wird, **dadurch gekennzeichnet, dass** vor dem Abtastprozess (AP) ein Schlacken-Entfernungsprozess (SE) zur Entfernung von Schlacke am Ende des Schweißdrahtes (2) durchgeführt wird, wobei mit Beginn des Schlacken-Entfernungsprozesses (SE) der Schweißstrom (I) auf ein Minimum gesenkt wird, und der Schweißdraht (2) mit einer schnellen wiederkehrenden Vor-/Rückwärtsbewegung zyklisch eine vorgegebene Weglänge in Richtung Werkstück (W) und um eine kleinere Wegstrecke wieder vom Werkstück (W) wegbewegt wird, sodass die Förderung des Schweißdrahtes (2) zum Werkstück (W) überwiegt, bis ein Kurzschluss (KS) zwischen dem Schweißdraht (2) und dem Werkstück (W) erkannt wird, worauf der Schlacken-Entfernungsprozess (SE) beendet wird.

2. Verfahren nach Anspruch 1, **dadurch gekennzeichnet, dass** der Schlacken-Entfernungsprozess (SE) beendet wird, wenn hintereinander mehrere, vorzugsweise fünf, Kurzschlüsse zwischen dem Schweißdraht (2) und dem Werkstück (W) detektiert werden.

3. Verfahren nach Anspruch 1 oder 2, **dadurch gekennzeichnet, dass** vor dem Abtastprozess (AP) der Schlacken-Entfernungsprozess (SE) gestartet wird, wenn während einer festgelegten Zeitspanne (Δt_{KS}) kein Kurzschluss zwischen dem Schweißdraht (2) und dem Werkstück (W) detektiert wird.

4. Verfahren nach einem der Ansprüche 1 bis 3, **dadurch gekennzeichnet, dass** vor dem Abtastprozess (AP) der Schweißdraht (2) um eine vorgegebene Drahtvorschubgeschwindigkeit (v_{dc}) in Richtung Werkstück (W) bewegt wird, und der Schlacken-Entfernungsprozess (SE) gestartet wird, wenn die Drahtvorschubgeschwindigkeit (v_{d}) unter einen vorgegebenen Schwellwert (v_{dS}) sinkt.

5. Verfahren nach Anspruch 4, **dadurch gekennzeichnet, dass** vor der Messung, ob die Drahtvorschubgeschwindigkeit (v_{d}) unter den vorgegebenen Schwellwert (v_{dS}) sinkt, eine vorgegebene Zeitdauer (Δt_{T}) gewartet wird.

6. Verfahren nach einem der Ansprüche 1 bis 5, **dadurch gekennzeichnet, dass** der Schlacken-Entfernungsprozess (SE) gestartet wird, wenn die Kraft (F) am Schweißdraht (2) einen vorgegebenen Maximalwert (Fₘₐₓ) überschreitet.

7. Verfahren nach einem der Ansprüche 1 bis 6, **dadurch gekennzeichnet, dass** der Schlacken-Entfernungsprozess (SE) gestartet wird, wenn die zeitliche Änderung der Kraft (dF/dt) am Schweißdraht (2) einen vorgegebenen Schwellwert ((dF/dt)ₘₐₓ) überschreitet.

8. Verfahren nach einem der Ansprüche 1 bis 7, **dadurch gekennzeichnet, dass** der Schlacken-Entfernungsprozess (SE) gestartet wird, wenn die Drahtvorschubgeschwindigkeit (v_{d}) während des Abtastprozesses (AP) unter einen vorgegebenen Schwellwert sinkt.

9. Verfahren nach einem der Ansprüche 1 bis 8, **dadurch gekennzeichnet, dass** der Schlacken-Entfernungsprozess (SE) gestartet wird, wenn während des Abtastprozesses (AP) die Kraft (F) am Schweißdraht (2) einen vorgegebenen Maximalwert (Fₘₐₓ) überschreitet.

10. Verfahren nach einem der Ansprüche 1 bis 9, **dadurch gekennzeichnet, dass** der Schlacken-Entfernungsprozess (SE) gestartet wird, wenn während des Abtastprozesses (AP) die zeitliche Änderung der Kraft (dF/dt) am Schweißdraht (2) einen vorgegebenen Schwellwert ((dF/dt)ₘₐₓ) überschreitet.

11. Verfahren nach einem der Ansprüche 1 bis 10, **dadurch gekennzeichnet, dass** der Anstellwinkel (β) des Schweißbrenners (1) zur Oberfläche (O) des Werkstücks (W) ermittelt wird, und der Schlacken-Entfernungsprozess (SE) deaktiviert wird, wenn der Winkel (β) einen vorgegebenen Grenzwert des Winkels (β_{G}) unterschreitet.

12. Verfahren nach einem der Ansprüche 1 bis 11, **dadurch gekennzeichnet, dass** der Schlacken-Entfernungsprozess (SE) wiederholt wird, wenn kein Kurzschluss zwischen Schweißdraht (2) und Werkstück (W) detektiert wird.

13. Verfahren nach Anspruch 12, **dadurch gekennzeichnet, dass** eine Fehlermeldung ausgegeben wird, wenn nach mehreren Wiederholungen des Schlacken-Entfernungsprozesses (SE), insbesondere nach 15 Wiederholungen, kein stabiler Kurzschluss zwischen Schweißdraht (2) und Werkstück (W) detektiert wird.

14. Verfahren nach Anspruch 13, **dadurch gekennzeichnet, dass** nach Ausgabe der Fehlermeldung das Ende des Schweißdrahts (2) in einer Abschneidevorrichtung (7) abgeschnitten wird.
